# EUROPÄISCHE PATENTSCHRIFT

(11) **EP 0 944 823 B1**
(45) Veröffentlichungstag und Bekanntmachung des Hinweises auf die Patenterteilung: **22.05.2002**
(21) Anmeldenummer: 97952012.9
(22) Anmeldetag: 29.11.1997
(51) Int. Cl.: G01N 22/04

(54) **VERFAHREN UND VORRICHTUNG ZUR ERMITTLUNG DER KONZENTRATION EINES VON LUFT ABWEICHENDEN MEDIUMS IN EINEM AEROSOL**
METHOD AND DEVICE FOR DETERMINING IN AN AEROSOL THE CONCENTRATION OF A MEDIUM WHICH IS DIFFERENT FROM AIR
PROCEDE ET DISPOSITIF POUR DETERMINER LA CONCENTRATION D'UN MILIEU SE DIFFERENCIANT DE L'AIR DANS UN AEROSOL

(30) Priorität: 11.12.1996 DE 19651490
(43) Veröffentlichungstag der Anmeldung: 29.09.1999
(73) Patentinhaber: SIG Combibloc GmbH, 52441 Linnich (DE)
(72) Erfinder: KANNGIESSER, Hartmut, CH-8038 Zürich (CH)
(74) Vertreter: Schüll, Gottfried, Dipl.-Phys.
(86) Internationale Anmeldenummer: EP9706664
(87) Internationale Veröffentlichungsnummer: WO9826279

(56) Entgegenhaltungen:
- DE-A- 4 431 001
- HO W. ET AL.: "Microwave measurements of the liquid water content of atmospheric aerosols" JOURNAL OF APPLIED METEOROLOGY, Bd. 13, Nr. 8, 1974, USA, Seiten 871-879, XP002058849

## Beschreibung

Die Erfindung betrifft ein Verfahren und eine Vorrichtung zur Ermittlung der Konzentration eines von Luft abweichenden Mediums in einem Luft/Medium-Aerosol durch Messung der Dielektrizitätskonstanten des Mediums unter Verwendung von Mikrowellen in einem Hohlleiter, wobei das Aerosol durch einen neutralen Schlauch den Hohlleiter durchquert, wobei das sich im Hohlleiter ausbreitende Mikrowellen-Signal durch die von Luft unterschiedliche Dielektrizitätskonstante des Mediums einer Dämpfung und einer Phasenverschiebung unterworfen wird und wobei die Phasenverschiebung des Mikrowellen-Signals unter Berücksichtigung der aktiven Wegstrecke (Schlauch im Hohlleiterquerschnitt) gemessen wird.

Wenn im Rahmen dieser Anmeldung von Ermittlung der H₂O₂-Konzentration gesprochen wird, so soll dies keine Beschränkung darauf darstellen, sondern nur beispielhaft für die Ermittlung der Konzentration eines Mediums in einem Luft/Medium-Aerosol genannt sein.

In Verpackungsanlagen zum aseptischen Abfüllen von Lebensmitteln in Verbundpackungen werden diese durch Einleiten eines heißen Luft/H₂O₂-Aerosols unmittelbar vor dem Befüllen sterilisiert. Dieses Aerosol wird von einem Dosiersystem hergestellt, in welchem die Konzentration einer H₂O₂-Lösung (H₂O₂ in Wasser) in einem Luftstrom eingestellt wird. Zum Erreichen einer optimalen Sterilisation unter wirtschaftlichen Bedingungen ist es wichtig, die Konzentration des H₂O₂ im Aerosol zu messen. Aus der eingesetzten Luftmenge und der Konzentration des H₂O₂ ergibt sich schließlich die Gesamtmenge des verwendeten H₂O₂.

Während die Luftmenge eines Dosiersystems mittels Schwebekörper gemessen und danach durch Einstellen des Luftdrucks konstant gehalten werden kann, muß die Konzentration des H₂O₂ berechnet werden. Hierbei ist es möglich, Meßverfahren zu verwenden, deren Meßgröße vom Volumen des H₂O₂ abhängig sind oder Meßverfahren einzusetzen, deren Meßgröße von der Tröpfchenzahl des H₂O₂ im Aerosol abhängig ist.

Volumenabhängige Meßverfahren haben den Vorteil, daß sie direkt und ohne Umrechnung die gewünschten Meßergebnisse liefern. Darüber hinaus soll ein Meßverfahren gefunden werden, das in der Lage ist, durch die ohnehin vorhandenen Verbindungsschläuche hindurch zu messen, ohne daß ein direkter Kontakt mit dem Meßgerät und dem Medium, beispielsweise dem stark korrosiven H₂O₂, notwendig ist. Dafür kommt eine Messung der von Luft abweichenden Dielektrizitätskonstanten in Betracht.

Aus der W.HO ET AL.: "Microwave measurements of the liquid water content of atmospheric aerosols" JOURNAL OF APPLIED METEOROLOGY, Bd. 13, Nr. 8, 1974, USA, Seiten 871-879, XP002058849, ist eine Messung des Anteils von flüssigem Wasser in atmosphärischen Aerosolen mit Hilfe von Mikrowellenmessungen bekannt. Hintergrund dieser Messungen ist beispielsweise die Untersuchungen des Einflusses der relativen Luftfeuchte in der Atmosphäre auf die Sichtweite beispielsweise bei Nebel. Bei der bekannten Vorrichtung werden die Flüssigkeitspartikel aus dem in einer Rohrleitung geführten Gas von einem Filter herausgefiltert und gesammelt. Dieser Filter für die Flüssigkeitspartikel befindet sich im Zentrum eines Hohlraumresonators, dessen Resonanzfrequenz sich durch das Vorhandensein von Material mit hoher Dielektrizitätskonstante im Filter verschiebt. Als Maß für die Konzentration des Aerosols wird die Frequenzänderung im Hohlraumresonator herangezogen.

Bei der aus dem Stand der Technik bekannten Vorrichtung ist problematisch, daß die Messung der Konzentration des Aerosols nur semikontinuierlich erfolgen kann, da der Filter zur Korrektur von Variationen in der Umgebungseinflüsse regelmäßig getrocknet werden muß. Darüber hinaus ist bei der bekannten Vorrichtung problematisch, daß mit ihr nur zeitliche Variationen in der Konzentration erfaßt werden können, die eine Zeitkonstante haben, die deutlich größer ist als die Zeitdauer für die Trocknungszyklen des Filters. Im Stand der Technik werden als typische Zeiträume etwa 20 Minuten genannt. Dies ist zur Steuerung von Konzentrationen beispielsweise in Verpackungsanlagen zum aseptischen Abfüllen bei weitem nicht ausreichend.

Aus der DE 44 31 001 A1 ist ein Verfahren und eine Vorrichtung zur Messung der Dielektrizitätskonstanten mit einem Hohlleiter und Mikrowellensender und -empfänger bekannt. Dabei ist der Hohlleiter als Hohlraumresonator ausgebildet, der einen quer verlaufenden Schlitz in seinem mittleren Bereich aufweist, um ein Probenblatt senkrecht zur Längsrichtung des Hohlleiters anzuordnen. Durch Differenz der Resonanzfrequenzen des Hohlraumresonators mit und ohne Probe läßt sich Dielektrizitätskonstante der Probe messen.

Der Erfindung liegt die Aufgabe zugrunde, die bekannte Vorrichtung bzw. das bekannte Verfahren zur Messung der Konzentration eines Luft/Wasseraerosols so auszugestalten und weiterzubilden, daß sie mit geringem meßtechnischem Aufbau zur kontinuierlichen Messung der Konzentration eines von Luft abweichenden Mediums in einem durch den Hohlleiter strömenden Aerosol eingesetzt werden können.

Diese Aufgabe ist verfahrensmäßig dadurch gekennzeichnet, daß ein Abgleich zur Phasenverschiebung eines Aerosols bekannter Dielektrizitätskonstante erfolgt, daß aus den so ermittelten Konzentrationswerten des Mediums ein Mittelwert gebildet wird, daß durch Spiegelung des Mikrowellen-Signals an einem Kurzschluß im Hohlleiter eine Stehwelle mit einem Maximum des elektrischen Felder im Bereich des Schlauches erzeugt wird und daß die geometrische und elektrische Konfiguration so eingestellt wird, daß die Phasenverschiebung direkt proportional zur Konzentration des Mediums ist.

Vorrichtungsmäßig erfolgt die Lösung der Aufgabe mit einem Sensor und einer Auswerteeinheit, wobei der Sensor von einem Hohlleiter, und einem Mikrowellensender und - empfänger gebildet wird und wobei durch den Hohlleiter ein neutraler Schlauch zum Durchfluß des Aerosols geführt ist dadurch, daß der Mikrowellensender und -empfänger im Hohlleiter angeordnet ist, daß ein Ende des Hohlleiters durch einen längsverschiebbaren, elektrisch leitenden Kurzschluß verschlossen ist und daß der Schlauch im Maximum des elektrischen Feldes der im Hohlleiter entstehenden Stehwelle angeordnet ist, wobei die Auswerteeinheit wenigstens einen Vorverstärker zum Spannungsabgleich und zwei Tiefpassfilter zur Messung der Konzentrationsschwankungen des Mediums und des Mittelwertes (Wₘ) der Konzentration des Mediums aufweist.

Beim erfindungsgemäßen Verfahren breitet sich ein Mikrowellensignal in dem Hohlleiter aus, innerhalb dessen der Schlauch mit dem strömenden Aerosol verläuft. Das Signal wird einerseits durch die Übergänge von Luft in die Tröpfchen und zurück gestreut, woraus sich eine Dämpfung in Ausbreitungsrichtung der Welle ergibt. Andererseits entsteht durch das Vorhandensein von Tröpfchen anderer Dielektrizitätskonstante eine Laufzeitverschiebung, die von außen bei konstanter Arbeitsfrequenz als Phasenverschiebung gemessen werden kann.

Da sich herausgestellt hat, daß die Phasen- und die Absorptionsmessung qualitativ den gleichen Verlauf zeigen, kann die Messung mit der höheren Signalausbeute, die Phasenverschiebung oder aber eine Kombination aus Phasenverschiebung und Absorptionsmessung verwendet werden. Dies führt zu einem geringen Aufwand an Meßtechnik, da Phase und Amplitude nicht getrennt voneinander gemessen werden müssen und daher die Signalverläufe im Arbeitsfrequenzbereich nicht analysiert werden müssen. Aufgrund des gleichen Verlaufs von Phase und Amplitude reicht die relative Messung aus, eine Vermischung von Amplituden- und Phasenmessung ist also unschädlich.

Es ist möglich, wie beim eingangs genannten Stand der Technik den Mikrowellensender am einen Ende des Hohlleiters und den Empfänger am anderen Ende anzuordnen. Eine besondere Lehre der Erfindung sieht jedoch vor, daß Mikrowellensender und -empfänger an einem Ende des Hohlleiters angeordnet sind und das andere Ende des Hohlleiters durch einen elektrisch leitenden Kurzschluß verschlossen ist. Dieser Kurzschluß, ein elektrisch leitendes Element, das den gesamten lichten Hohlleiterquerschnitt ausfüllt, spiegelt die Meßstrecke, so d'aß im Hohlleiter eine Stehwelle gebildet wird, die durch das Aerosol verändert wird. Bevorzugt weist der Hohlleiter einen rechteckigen Querschnitt auf und verläuft der Schlauch quer zur Längsrichtung des Hohlleiters. Dabei ist in weiterer Ausgestaltung der Erfindung der Schlauch im Maximum des elektrischen Feldes der im Hohlleiter entstehenden Stehwelle angeordnet.

Um die Strömungsverhältnisse des Aerosols im durch den Hohlleiter geführten Schlauch zu vereinheitlichen, sieht eine weitere Ausgestaltung der Erfindung vor, daß der Schlauch unmittelbar vor seinem Eintritt in den Hohlleiter eine Krümmung von 180° aufweist und dazu bevorzugt in einem gebogenen Rohr verläuft. Auf diese Weise kann die Empfindlichkeit der Vorrichtung über den Querschnitt des Schlauches vereinheitlicht werden.

Ein besonders einfacher meßtechnischer Aufbau wird erfindungsgemäß dadurch erreicht, daß als Mikrowellensender und -empfänger ein handelsüblicher Bewegungsmelder verwendet wird. Solche Bewegungsmelder beinhalten sowohl eine Mikrowellenquelle als auch eine Mischerdiode, deren Ausgangssignale bereits im Basisband zur Verfügung stehen. Des weiteren gibt es im Handel bereits solche Bewegungsmelder, die bereits einen Flansch zum Anschluß an einen Hohlleiter aufweisen.

Zur Anzeige der Konzentrationsschwankungen des Aerosols und des Mittelwerts der Aerosolkonzentration kann ein Oszillograph, zur reinen Anzeige des Mittelwertes auch ein Multimeter, eingesetzt werden.

Die genaue Funktionsweise des erfindungsgemäßen Verfahrens und der entsprechenden Vorrichtung werden im Anschluß anhand einer ein bevorzugtes Ausführungsbeispiel darstellenden Zeichnung näher erläutert.

In der Zeichnung zeigen
- Fig. 1: den Sensor der erfindungsgemäßen Vorrichtung schematisch im Längsschnitt,
- Fig. 2: einen Schaltplan und ein Blockschaltbild der Auswerteeinheit der erfindungsgemäßen Vorrichtung,
- Fig. 3: ein Prinzipschaltbild des mit der erfindungsgemäßen Vorrichtung auszustattenden Dosiersystems und
- Fig. 4 bis 6: Diagramme von mit der erfindungsgemäßen Vorrichtung durchgeführten Messungen.

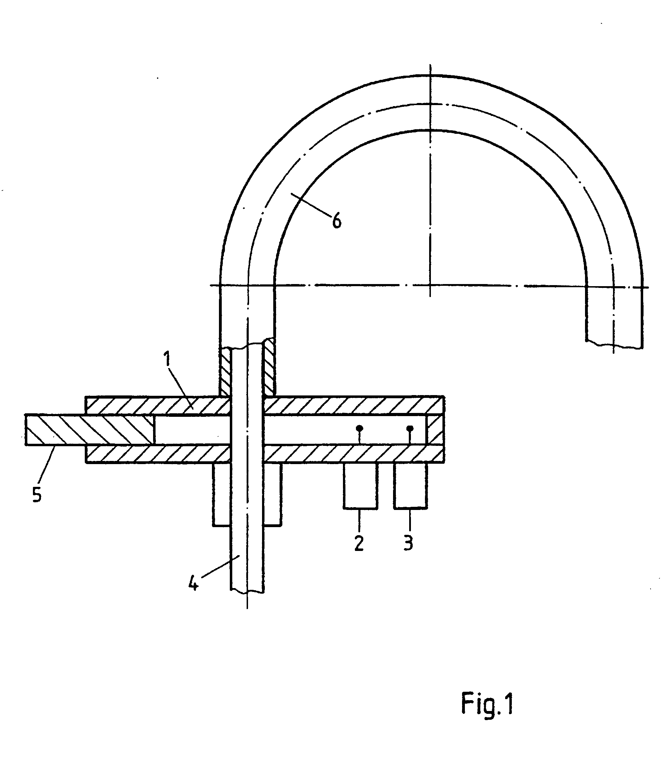

In Fig. 1 ist schematisch der Sensor der erfindungsgemäßen Vorrichtung im Längsschnitt dargestellt. Man erkennt einen im bevorzugten Ausführungsbeispiel rechteckigen Querschnitt aufweisenden Hohlleiter 1, an dessen einen Ende ein Mikrowellensender 2 und ein Mikrowellenempfänger 3 angeordnet sind. Quer durch den Hohlleiter 1 ist ein Schlauch 4 aus Kunststoff zur Durchführung des Aerosols durch den Hohlleiter 1 angeordnet. Das andere Ende des Hohlleiters 1 ist von einem elektrisch leitenden Kurzschluß 5, der den gesamten lichten Querschnitt des Hohlleiters 1 ausfüllt, verschlossen. Der Kurzschluß 5 ist im Hohlleiter 1 längsverschiebbar angeordnet und wird zur Ermittlung des besten Arbeitspunktes mit konstanten Schrittweiten aus dem Hohlleiter 1 herausgezogen, was einem Ansteigen der Konzentration des zu messenden Mediums entspricht. Es hat sich gezeigt, daß der Bereich ansteigender Detektorspannungen annähernd linear verläuft. Der vom verschiebbaren Kurzschluß 5 einzustellende Nullpunkt sollte bevorzugt kurz nach Überschreiten der maximalen negativen Detektorspannung gelegt werden.

Um einen maximalen Einfluß des Aerosols auf die Phasenverschiebung zu erreichen, ist der Schlauch 4 im Maximum des elektrischen Feldes der im Hohlleiter 1 entstehenden Stehwelle angeordnet.

Es hat sich gezeigt, daß bei den Messungen die Ausgangsspannung des Sensors sehr stark von der Lage des Schlauches 4 und dessen Krümmung, bevor er in den Hohlleiter 1 eintritt, abhängt. Dieser Effekt ist darauf zurückzuführen, daß die Empfindlichkeit über den Querschnitt des Schlauches 4 nicht konstant ist. Die Ausgangsspannung wird vielmehr durch die Verteilung der Aerosolkonzentration über den Querschnitt des Schlauches 4 beeinflußt. Im dargestellten und insoweit bevorzugten Ausführungsbeispiel des Sensors der erfindungsgemäßen Vorrichtung konnte die Abhängigkeit von Lage und Krümmung des Schlauches 4 außerhalb des Hohlleiters 1 durch eine fest verlegte, in einem gebogenen Rohr 6 verlaufende, Krümmung des Schlauches 4 um 180° vor Eintritt in den Hohlleiter 1 aufgehoben werden.

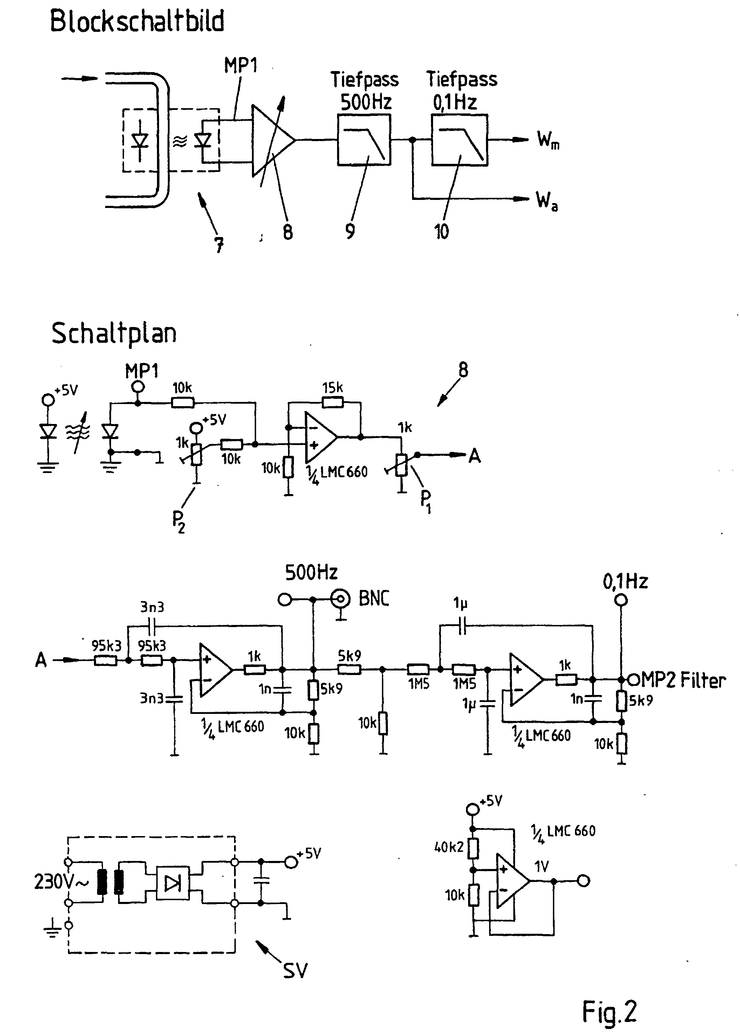

Fig. 2 zeigt nun das Blockschaltbild und den Schaltplan der Auswerteeinheit der erfindungsgemäßen Vorrichtung. Im Blockschaltbild ist der anhand Fig. 1 näher beschriebene Sensor nur schematisch dargestellt und mit dem Bezugszeichen 7 bezeichnet. Die an der Mischerdiode des Mikrowellenempfängers 3 abgegriffenen Spannungen liegen je nach Bauart zwischen -1 und -2 V. Mit zunehmender Konzentration des Mediums werden die negativen Spannungen geringer. Um direkt die Konzentration als Spannungssignal zu erhalten, muß daher die Ausgangsspannung um den Nullpunktswert verschoben werden. Dazu sieht die Auswerteeinheit ein Potentiometer P₁ im Vorverstärker 8 vor.

Schließlich zeigt das Blockschaltbild noch, daß die Auswerteeinheit zwei Tiefpassfilter 9, 10 aufweist. Bei der bevorzugten Messung der Konzentration von H₂O₂ in einem Luft/H₂O₂-Aerosol beträgt die Eckfrequenz des einen Tiefpassfilters 9 500 Hz und die des anderen Tiefpassfilters 10 0,1 Hz. Dabei lassen sich am Ausgang des Tiefpassfilters 9 die Konzentrationsspannungen des Aerosols im Schlauch messen und am Ausgang des Tiefpassfilters 10 läßt sich der Mittelwert Wₘ der Konzentration ablesen. Die Tiefpassfilter 9, 10 haben Butterworth-Charakteristik, um bei den Ausgangssignalen schnelles Einschwingen bei geringem Überschwingen zu gewährleisten.

Die Elektronik der Auswerteeinheit arbeitet mit einer angedeuteten Spannungsversorgung SV. Hierbei ist eine solche Spannungsversorgung zu wählen, daß nur positive Ausgangsspannungen möglich sind. Die Ausgangssignale liegen gegenüber Gerätemasse bevorzugt auf +1 V, damit auch Verschiebungen des Nullpunktes nach unten noch erkannt werden können.

Wie bereits erwähnt, soll im bevorzugten Ausführungsbeispiel die Konzentration von H₂O₂ eines Luft/H₂O₂-Aerosols in einem Dosiersystem gemessen werden.

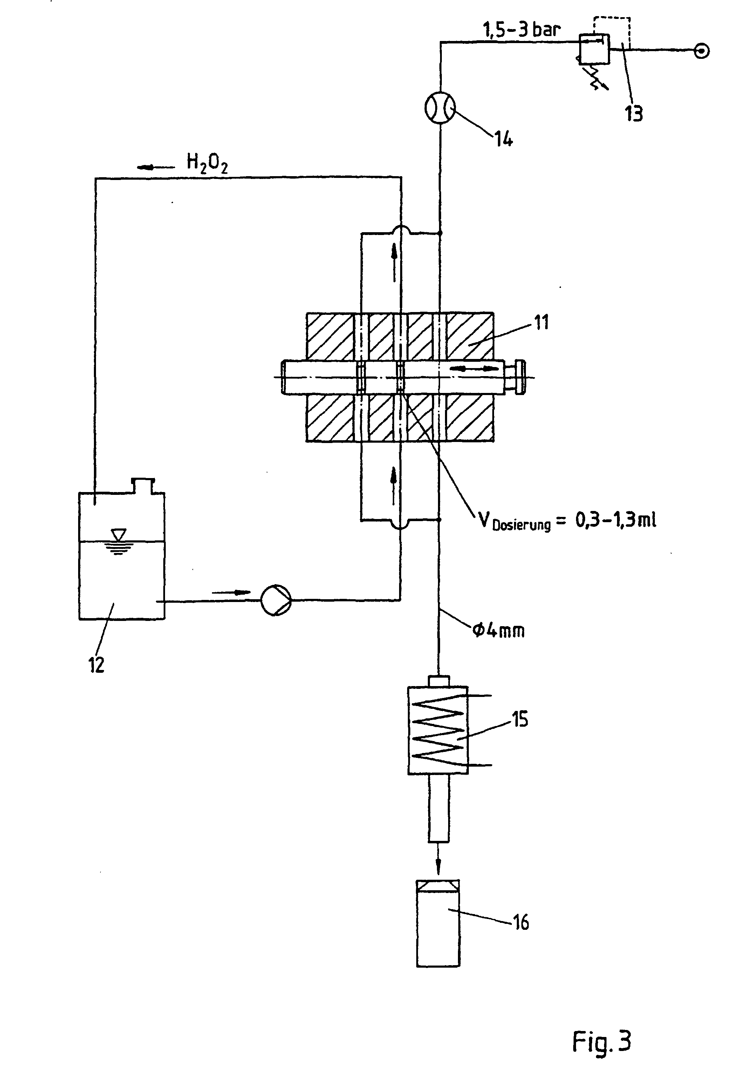

Ein solches Dosiersystem ist als Prinzipschaltbild in Fig. 3 dargestellt. Dabei erfolgt die Dosierung innerhalb eines Kolbendosierers 11, der mit nicht näher dargestellten Zu- und Rückläufen mit einem Tank 12 zur Bevorratung des H₂O₂ in Verbindung steht. Die von einem Kompressor 13 zur Verfügung gestellte Druckluft wird in einem Luftmengenmesser 14 gemessen und dem Kolbendosierer 11 zugeführt. Im gesamten Dosiersystem und in den Verbindungsleitungen entstehen Turbulenzen, durch die Luft/H₂O₂-Aerosol entsteht. Dieses Aerosol strömt nach Passieren einer Heizung 15 in eine leere Packung 16, um diese zu sterilisieren.

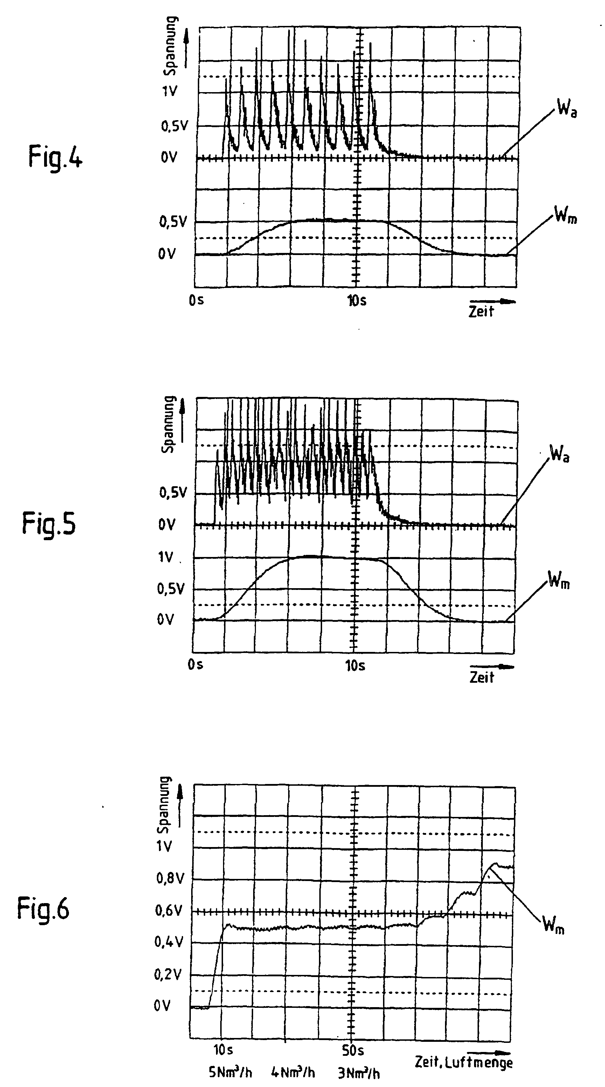

Fig. 4 zeigt ein Meßdiagramm der Ausgangsspannung über der Zeit. Der obere Spannungsverlauf zeigt dabei die Konzentrationsschwankungen des aktuellen Wertes Wₐ, gemessen am Ausgang des 500 Hz Tiefpassfilters 9, der untere Spannungsverlauf ist am Ausgang des 0,1 Hz Tiefpassfilters 10 gemessen und zeigt den Mittelwert Wₘ der gemessen Spannung an. Diese Messung wurde mit einem Kolbendosierer 11 bei einem Hub pro Sekunde durchgeführt. Die Eichung der Ausgänge des Meßgerätes sind in diesem Beispiel auf 1 V/ml Wasser im Aerosol geeicht. Der Kolbendosierer 11 gibt dabei 0,5 ml Wasser pro Hub in einem Luftstrom von 3,5 Nm³/h ab. Im zeitlichen Mittel ergibt das bei einem Hub pro Sekunde eine Wassermenge von 30 ml/min.

Fig. 5 zeigt die gleiche Messung wie in Bild 4, wobei der Kolbendosierer 11 mit zwei Hüben pro Sekunde arbeitet. Folglich ist auch der Mittelwert Wₘ doppelt so groß wie bei der Messung in Fig. 4.

Schließlich geht aus Fig. 6 hervor, daß die Anzeige der erfindungsgemäßen Vorrichtung nahezu unabhängig vom Luftstrom ist. Bei dem in Fig. 6 ermittelten Spannungsverlauf, abgegriffen am Ausgang des 0,1 Hz Tiefpassfilters, wurde der Luftstrom nach 10 Sekunden mit 5 Nm³/h eingesetzt und alle 10 Sekunden um 0,5 Nm³ pro Stunde reduziert. Die Messung endet bei 1 Nm³/h.
Zum Abgleich der erfindungsgemäßen Vorrichtung muß zunächst bei ausgeschaltetem Kolbendosierer 11 die Spannung an der Mischerdiode des Mikrowellenempfängers 3 mit dem längsverschiebbaren Kurzschluß 5 auf maximale negative Spannung gegenüber der Gehäusemasse eingestellt werden.

Des weiteren muß bei ausgeschaltetem Koblendosierer 11 mit dem Potentiometer P₁ die Spannung am Ausgang des Tiefpassfilters 10 auf 0 V eingestellt werden. Danach wird bei laufendem Kolbendosierer mit dem Potentiometer P₁ des Vorverstärkers 8 am Meßpunkt des Ausgangs des 0,1 Hz Tiefpassfilters 10 gegen Gerätemasse gemessen, auf 0,5 V eingestellt. Schließlich wird bei wiederum ausgeschaltetem Kolbendosierer 11 mit dem Potentiometer P₂ des Vorverstärkers 8 die Spannung am Ausgang des Tiefpassfilters 10, jetzt gegen +1 V gemessen, von -1 V auf 0 V eingestellt. Damit ist der Abgleich der erfindungsgemäßen Vorrichtung abgeschlossen und das Meßgerät einsatzbereit.

## Patentansprüche

1. Verfahren zur Ermittlung der Konzentration eines von Luft abweichenden Mediums in einem Luft/Medium-Aerosol durch Messung der Dielektrizitätskonstanten des Mediums unter Verwendung von Mikrowellen in einem Hohlleiter, wobei das Aerosol durch einen neutralen Schlauch den Hohlleiter durchquert, wobei das sich im Hohlleiter ausbreitende Mikowellen-Signal durch die von Luft unterschiedliche Dielektrizitätskonstante des Mediums einer Dämpfung und einer Phasenverschiebung unterworfen wird und wobei die Phasenverschiebung des Mikrowellen-Signals unter Berücksichtigung der aktiven Wegstrecke, z.B. Schlauch im Hohlleiterquerschnitt, gemessen wird,
**dadurch gekennzeichnet, daß** ein Abgleich zur Phasenverschiebung eines Aerosols bekannter Dielektrizitätskonstante erfolgt, daß aus den so ermittelten Konzentrationswerten des Mediums ein Mittelwert gebildet wird, daß durch Spiegelung des Mikrowellen-Signals an einem Kurzschluß im Höhlleiter eine Stehwelle mit einem Maximum des elektrischen Feldes im Bereich des Schlauches erzeugt wird und daß die geometrische und elektrische Konfiguration so eingestellt wird, daß die Phasenverschiebung direkt proportional zur Konzentration des Mediums ist.

2. Vorrichtung zur Ermittlung der Konzentration eines von Luft abweichenden Mediums in einem Aerosol, insbesondere der Konzentration von H₂O₂ in einem Luft/ H₂O₂-Aerosol, mit einem Sensor (7) und einer Auswerteeinheit, wobei der Sensor (7) von einem Hohlleiter (1), und einem Mikrowellensender (2) und -empfänger (3) gebildet wird und wobei durch den Hohlleiter (1) ein neutraler Schlauch (4) zum Durchfluß des Aerosols geführt ist,
**dadurch gekennzeichnet, daß** der Mikrowellensender (2) und -empfänger (3) im Hohlleiter (1) angeordnet ist, daß ein Ende des Hohlleiters durch einen längsverschiebbaren, elektrisch leitenden Kurzschluß verschlossen ist und daß der Schlauch (4) im Maximum des elektrischen Feldes der im Hohlleiter (1) entstehenden Stehwelle angeordnet ist, wobei die Auswerteeinheit wenigstens einen Vorverstärker (8) zum Spannungsabgleich und zwei Tiefpassfilter (9, 10) zur Messung der Konzentrationsschwankungen des Mediums und des Mittelwertes (Wₘ) der Konzentration des Mediums aufweist.

3. Vorrichtung nach Anspruch 2
**dadurch gekennzeichnet, daß** der Mikrowellensensor (2) und -empfänger (3) an einem Ende des Hohlleiters (1) angeordnet sind und das andere Ende des Hohlleiters (1) durch den elektrisch leitenden Kurzschluß (5) verschlossen ist.

4. Vorrichtung nach Anspruch 2 oder 3,
**dadurch gekennzeichnet, daß** der Hohlleiter (1) einen rechteckigen Querschnitt aufweist

5. Vorrichtung nach einem der Ansprüche 2 bis 4,
**dadurch gekennzeichnet, daß** der Schlauch (4) quer zur Längsrichtung des Hohlleiters (1) verläuft.

6. Vorrichtung nach einem der Ansprüche 2 bis 5,
**dadurch gekennzeichnet, daß** der Schlauch (4) unmittelbar vor seinem Eintritt in den Hohlleiter (1) eine Krümmung von 180° aufweist.

7. Vorrichtung nach Anspruch 6,
**dadurch gekennzeichnet, daß** der Schlauch (4) zum Erreichen der Krümmung in einem gebogenen Rohr (6) geführt ist.

8. Vorrichtung nach einem der Ansprüche 3 bis 7,
**dadurch gekennzeichnet, daß** als Mikrowellensender (2) und -empfänger (3) ein handelsüblicher Bewegungsmelder vorgesehen ist.

9. Vorrichtung nach einem der Ansprüche 2 bis 8,
**dadurch gekennzeichnet, daß** zur Anzeige der Konzentrationsschwankungen (Wₐ) des Aerosols und des Mittelwertes (Wₘ) der Aerosolkonzentration ein Oszillograph vorgesehen ist.

10. Vorrichtung nach einem der Ansprüche 2 bis 9,
**dadurch gekennzeichnet, daß** zur Anzeige des Mittelwertes (Wₘ) der Aerosolkonzentration ein Multimeter vorgesehen ist.

11. Vorrichtung nach einem der Ansprüche 2 bis 10,
**dadurch gekennzeichnet, daß** der Sensor (7) mit dem gebogenen Rohr (6), der Auswerteeinheit und der Spannungsversorgung in einem Gehäuse angeordnet sind.

## Claims

1. A method for determining the concentration of a medium differing from air in an air/medium aerosol by measuring the dielectric constants of the medium using microwaves in a hollow conductor, with the aerosol traversing the hollow conductor through a neutral tube, with the microwave signal propagating in the hollow conductor being subjected to damping and a phase shift by the dielectric constant of the medium, which differs from that of air, and with the phase shift of the microwave signal being measured in consideration of the active distance, e.g. the tube in the hollow conductor cross-section,
**characterized in that** a calibration to the phase shift of an aerosol of known dielectric constant is performed, an average value is produced from the concentration values of the medium determined in this way, a standing wave with a maximum of the electric field in the region of the tube is generated by reflection of the signal at a short-circuit in the hollow conductor, and the geometric and electrical configuration is adjusted in such a way that the phase shift is directly proportional to the concentration of the medium.

2. A device for determining the concentration of a medium differing from air in an aerosol, particularly the concentration of H₂O₂ in an air/H₂O₂ aerosol, having a sensor (7) and an evaluation unit, with the sensor (7) being formed by a hollow conductor (1) and a microwave transmitter (2) and receiver (3), and with a neutral tube (4) being led through the hollow conductor (1) for the aerosol to flow through,
**characterized in that** the microwave transmitter (2) and receiver (3) is positioned in the hollow conductor (1), one end of the hollow conductor is sealed by an electrically conductive short-circuit, which is displaceable lengthwise, and the tube (4) is positioned in the maximum of the electric field of the standing wave arising in the hollow conductor (1), with the evaluation unit having at least one preamplifier (8) for voltage calibration and two low-pass filters (9, 10) for measuring the concentration oscillations of the medium and the average value (Wₘ) of the concentration of the medium.

3. The device according to claim 2,
**characterized in that** the microwave transmitter (2) and receiver (3) are positioned at one end of the hollow conductor (1) and the other end of the hollow conductor (1) is sealed by the electrically conductive short-circuit (5).

4. The device according to claim 2 or 3,
**characterized in that** the hollow conductor (1) has a rectangular cross-section.

5. The device according to one of claims 2 to 4,
**characterized in that** the tube (4) runs transverse to the lengthwise direction of the hollow conductor (1).

6. The device according to one of claims 2 to 5,
**characterized in that** the tube (4) has a curvature of 180° immediately before its entrance into the hollow conductor (1).

7. The device according to claim 6,
**characterized in that** the tube (4) is guided in a bent pipe (6) to achieve the curvature.

8. The device according to one of claims 3 to 7,
**characterized in that** a commercially available motion detector is provided as the microwave transmitter (2) and receiver (3).

9. The device according to one of claims 2 to 8,
**characterized in that** an oscillograph is provided to display the concentration oscillations (Wₐ) of the aerosol and the average value (Wₘ) of the aerosol concentration.

10. The device according to one of claims 2 to 9,
**characterized in that** a multimeter is provided to display the average value (Wₘ) of the aerosol concentration.

11. The device according to one of claims 2 to 10,
**characterized in that** the sensor (7) is located in a housing with the bent pipe (6), the evaluation unit, and the voltage supply.

## Revendications

1. Procédé destiné à déterminer la concentration d'un milieu différent de l'air dans un aérosol air/milieu, par la mesure de la permittivité du milieu à partir de L'utilisation de micro-ondes dans un guide d'ondes, sachant que l'aérosol circule dans un tuyau neutre guidé à travers le guide d'ondes, moyennant quoi le signal des micro-ondes qui se propage dans le guide d'ondes est soumis à un affaiblissement et à un déphasage dus à la permittivité du milieu, différente de celle de l'air, et moyennant quoi le déphasage du signal des micro-ondes est mesuré en tenant compte du trajet actif, tel que le tuyau à l'intérieur de la section du guide d'ondes, **caractérisé en ce qu'**un équilibrage est effectué en vue du déphasage d'un aérosol à permittivité connue, **en ce qu'**une valeur moyenne est calculée à partir des valeurs de la concentration du milieu ainsi déterminées, **en ce qu'**une onde stationnaire avec un maximum du champ électrique est générée dans la zone du tuyau par la réflexion du signal des micro-ondes au niveau d'un court-circuit dans le guide d'ondes et **en ce que** la configuration géométrique et électrique est définie de telle sorte que le déphasage est directement proportionnel à la concentration du milieu.

2. Dispositif destiné à déterminer la concentration d'un milieu différent de l'air dans un aérosol, en particulier la concentration de H₂O₂ dans un aérosol air/H₂O₂, comprenant un capteur (7) et une unité d'analyse, sachant que le capteur (7) est formé par un guide d'ondes (1) et un émetter de micro-ondes (2) et un récepteur de micro-ondes (3) et sachant qu'un tuyau neutre (4) dans lequel circule l'aérosol est guidé à travers le guide d'ondes (1), **caractérisé en ce que** l'émetteur de micro-ondes (2) et le récepteur de micro-ondes (3) sont disposés dans le guide d'ondes (1), **en ce qu'**une extrémité du guide d'ondes est fermée par un court-circuit électro-conducteur, susceptible de se déplacer dans le sens longitudinal, et **en ce que** le tuyau (4) est disposé dans le maximum du champ électrique de l'onde stationnaire générée dans le guide d'ondes (1), l'unité d'analyse comprend au moins un préamplificateur (8) pour l'équilibrage de la tension et deux filtres passe-bas (9, 10) pour mesurer les variations de la concentration du milieu et la valeur moyenne (Wₘ) de la concentration du milieu.

3. Dispositif selon la revendication 2, **caractérisé en ce que** l'émetteur de micro-ondes (2) et le récepteur de micro-ondes (3) sont disposés à une extrémité du guide d'ondes (1) et l'autre extrémité du guide d'ondes (1) est fermée par le court-circuit (5) électro-conducteur.

4. Dispositif selon la revendication 2 ou 3, **caractérisé en ce que** le guide d'ondes (1) est conçu avec une section rectangulaire.

5. Dispositif selon une des revendications 2 à 4, **caractérisé en ce que** le tuyau (4) est posé transversalement au sens longitudinal du guide d'ondes (1).

6. Dispositif selon une des revendications 2 à 5, **caractérisé en ce que** le tuyau (4) présente une courbure de 180° directement en amont de son entrée dans le guide d'ondes (1).

7. Dispositif selon la revendication 6, **caractérisé en ce que** le tuyau (4) est guidé dans un tube coudé (6) pour obtenir la courbure.

8. Dispositif selon une des revendications 3 à 7, **caractérisé en ce qu'**un capteur de déplacement classique est prévu pour former l'émetteur de micro-ondes (2) et le récepteur de micro-ondes (3).

9. Dispositif selon une des revendications 2 à 8, **caractérisé en ce qu'**un oscillographe est prévu pour afficher les variations de la concentration (Wₐ) de l'aérosol et la valeur moyenne (Wₘ) de la concentration de l'aérosol.

10. Dispositif selon une des revendications 2 à 9, **caractérisé en ce qu'**un multimètre est prévu pour afficher la valeur moyenne (Wₘ) de la concentration de l'aérosol.

11. Dispositif selon une des revendications 2 à 10, **caractérisé en ce que** le capteur (7) avec le tube coudé (6), l'unité d'analyse et l'alimentation en courant sont disposés dans un boîtier.
